# EUROPÄISCHE PATENTSCHRIFT

(11) **EP 4 038 299 B1**
(45) Veröffentlichungstag und Bekanntmachung des Hinweises auf die Patenterteilung: **04.09.2024**
(21) Anmeldenummer: 20789008.8
(22) Anmeldetag: 29.09.2020
(51) Int. Cl.: F16L 23/08, F01N 13/18

(54) **PROFILSCHELLE MIT VERRASTLASCHE**
PROFILE CLAMP WITH LATCHING TAB
PINCE PROFILÉE À LANGUETTE DE VERROUILLAGE

(30) Priorität: 01.10.2019 DE 102019126484
(43) Veröffentlichungstag der Anmeldung: 10.08.2022
(73) Patentinhaber: NORMA Germany GmbH, 63477 Maintal (DE)
(72) Erfinder: AKREMI, Belal, Newbury Berkshire RG19 6HW (GB); JAROSZ, Mateusz, Newbury Berkshire RG19 6HW (GB); RUMBAUSKIENE, Tatjana, Newbury Berkshire RG19 6HW (GB); BAUDOIN, Manuel, Newbury Berkshire RG19 6HW (GB)
(74) Vertreter: Patentanwälte Olbricht Buchhold Keulertz
(86) Internationale Anmeldenummer: PCT/EP2020/077164
(87) Internationale Veröffentlichungsnummer: WO 2021/063908

(56) Entgegenhaltungen:
- EP-A1- 3 217 059
- EP-B1- 3 217 059
- WO-A1-03/048624
- WO-A1-2012/013891
- DE-A1- 102014 002 659

## Beschreibung

Die Erfindung betrifft eine Profilschelle mit einer Verrastlasche gemäß dem Oberbegriff von Anspruch 1.

Eine Schelle, wie eine Profilschelle, kann etwa zum fluiddichten Verbinden zweier Rohrenden oder zweier Flansche eingesetzt werden, die mit radial nach außen gerichteten Flanschen ausgestattet sind. Hierzu werden die Flansche zueinander positioniert und die Profilschelle mit einem spannbaren, in der Regel zwei oder mehrteiligen Schellenband wird auf die Flansche aufgesetzt. Die Verbindung wird durch Spannen der Profilschelle fixiert, indem axiale und radiale Haltekräfte auf die Flansche einwirken. Ein Schellenband der Profilschelle weist hierfür üblicherweise einen U-förmigen oder einen V-förmigen Querschnitt auf, der mit den Flanschen in Flächenkontakt gerät.

Zum Erreichen der gewünschten Abdichtung wird zwischen die Flansche oftmals ein Ringelement mit einem ringförmigen Dichtbereich eingelegt, der mit einem axialen Flächenkontakt mit beiden Flanschen gelangt, wobei die Dichtwirkung durch das Verspannen der Flansche erzielt wird.

Es sind Profilschellen mit einem Schellenband und einem ringförmigen Ringelement mit einem Ringkörper bekannt, welche zur Verbindung von zwei Rohrenden oder Flansche dienen. Üblicherweise umfasst das Schellenband zwei Spannköpfe auf, die über ein Spannelement miteinander verbunden sind oder verbunden werden können.

Für eine ideale Abdichtung ist es erforderlich, dass das Ringelement präzise gegenüber den Flanschen ausgerichtet ist. Ist das Ringelement separat und nicht an der Schelle oder einem Flansch befestigt, muss ein Benutzer die Schelle, das Ringelement und die zu verbindenden Rohre gleichzeitig handhaben, so dass der Einbau der Schelle erschwert wird. Vor dem Verbinden der Rohrenden können die Rohrenden vorpositioniert werden, was zumeist händisch erfolgt und umständlich ist. Hierfür können am Ringelement diverser Rastelemente angeordnet sein, um den Flansch zu klammern. Vorpositionieren bedeutet, dass zumindest ein, vorzugsweise beide Flansche mit dem Ringelement klammern, das Schellenband jedoch noch nicht verspannt ist.

Eine derartige Profilschelle ist beispielsweise aus der EP 1 451 498 A1 bekannt und dient zum Verbinden zweier Rohrenden. Die dort offenbarte Schelle weist ein Schellenband und ein ringförmiges Ringelement auf, welches innerhalb des Schellenbands angeordnet ist. Die Schelle weist zwei Spannköpfe auf, die mittels einer Schraube als Spannelement miteinander verbunden sind. Das Ringelement umfasst in axialer Richtung der Schelle abstehende Befestigungsklammern zum Befestigen des Ringelements an der Schelle. Die Befestigungsklammern sind derart umgebogen, dass deren dem Ringelement gegenüberliegende Enden auf einer Innenfläche oder Außenumfangsfläche der Schelle auf- oder anliegen. Mit anderen Worten wirken die Enden der Befestigungsklammern mit dem Schellenband zusammen. Dieses Zusammenwirken ist jedoch nachteilig und nicht gewünscht, wie nachfolgend ausgeführt. Manche Befestigungsklammern weisen zum Klammern eines Rohrendes jeweils eine Zunge auf, die das Rohrende hintergreift. Das Rohrende ist dann zwischen der Zunge und einem sich entgegenstreckenden Profilvorsprung in dem Ringelement irreversibel geklammert. Das dort offenbarte Schellenband weist entlang seines Umfangs eine Vielzahl an verhältnismäßig kleinen Zungen zum Klammern auf. Die Vielzahl der Zungen führt dazu, dass der montierende Benutzer nicht eindeutig feststellen kann, ob nun eine Klammerung zwischen Schellenband und Flansch vorliegt oder nicht, da zur sicheren Dichtung alle Zungen klemmen müssen. Auch kann er aufgrund der kleinen Zungen nicht zweifelsfrei feststellen, dass einzelne Zungen klemmen. Der Montierende Nutzer muss somit nach dem Vorpositionieren eine Nachkontrolle durchführen, was umständlich sowie zeit- und kostenintensiv ist.

Eine weitere Profilschelle mit einem Schellenband und einen ringförmigen Ringelement ist aus der WO 2012/013891 bekannt.

Aufgabe der vorliegenden Erfindung ist es daher, eine Profilschelle der eingangs genannten Art vorzuschlagen, die hinsichtlich Fertigungsaufwand vereinfacht ist sowie eine zweifelsfrei erfolgte Vorpositionierung in einfacher Weise erkennen lässt.

Diese Aufgabe ist erfindungsgemäß mit der Profilschelle nach Anspruch 1 und der Leitungsverbindungsanordnung nach Anspruch 10 gelöst. Hauptmerkmale der Erfindung sind im kennzeichnenden Teil von Anspruch 1 angegeben. Ausgestaltungen sind Gegenstand der Ansprüche 2 bis 9.

Erfindungsgemäß wird eine Profilschelle mit einem Schellenband und einem ringförmigen Ringelement mit einem Ringkörper vorgeschlagen, wobei das Schellenband zwei Spannköpfe aufweist, die über ein Spannelement miteinander verbunden sind, wobei das Ringelement zumindest eine erste Verrastlasche umfasst, welche in axialer Richtung der Profilschelle vom Ringkörper abragend und zumindest abschnittsweise aus dem Schellenband herausragend angeordnet ist, wobei die erste Verrastlasche einen ersten Verrastabschnitt und einen dazu entgegengesetzt verlaufenden Freischwingabschnitt aufweist, wobei der erste Verrastabschnitt ausgebildet ist, um eine in Richtung Quermittelebene der Profilschelle wirkende Kraft auf einen Flansch eines Rohrendes auszuüben, und der erste Verrastabschnitt eine erste Kontaktkante aufweist, die zur Herstellung eines Punktkontaktes oder Linienkontaktes mit dem Flansch des Rohrendes ausgebildet ist.

Mittels der ersten Verrastlasche ist somit bei Montage bzw. beim Verbinden der beiden Rohrenden ein Vorpositionieren eines Rohrendes am Ringelement vor der endgültigen Verspannung des Schellenbandes möglich, wodurch ein separates Halten des Rohrendes nicht mehr nötig ist. Das Rohrende rastet in einfacher Weise durch Einstecken in das Ringelement ein. Die Verrastlasche ragt teilweise aus dem Schellenband heraus und zwar derart, dass der Benutzer ein Verrasten zweifelsfrei erkennen kann. Der Punkt- oder Linienkontakt sorgt für ausreichenden Halt in axialer Richtung und radialer Richtung bei gleichzeitig möglichst geringer Auflagefläche.

Die beiden zu verbindenden Rohrenden können beispielsweise als Paar aus einem Trichterende und einem bikonischen Ende ausgebildet sein. Es ist denkbar, dass das bikonische Ende des Rohres mit der ersten Verrastlasche zusammenwirkt. Das Ringelement kann zumindest ein Halteelement zum Abstützen innerhalb des Schellenbandes aufweisen. Die Rohrenden können auch über entsprechende Flasche verbunden werden.

Weiter erfindungsgemäß fluchten der erste Verrastabschnitt und der Freischwingabschnitt miteinander. Somit ist zwischen diesen Elementen keine Stufe und kein Versatz ausgebildet, was einen Kraftfluss ungehindert und ohne Umlenkung oder Wirbelbildung linear von dem ersten Verrastabschnitt zum Freischwingabschnitt laufen lässt. Eine Verformung oder Lageänderung des Verrastabschnitts führt somit unmittelbar auch zu einer Verformung oder Lageänderung des Freischwingabschnitts, was vom Benutzer zweifelsfrei erkennbar ist. Er kann so sehr einfach ein sicheres Verklemmen feststellen.

Gemäß einer bevorzugten Ausführungsform der Schelle nach der Erfindung ist der erste Verrastabschnitt als ein aus der ersten Verrastlasche herausgetrennter Abschnitt, insbesondere als Stanzabschnitt ausgebildet. Dadurch kann eine kostengünstig herstellbare monolithische erste Verrastlasche geschaffen werden, die auch monolithisch mit dem Ringelement ausgebildet sein kann.

Gemäß einer weiteren bevorzugten Weiterbildung der erfindungsgemäßen Schelle ist der erste Verrastabschnitt nach Art eines Widerhakens ausgebildet. Alternativ oder zusätzlich kann der erste Verrastabschnitt ausgebildet sein, um nach Art eines Widerhakens auf den Flansch des Rohrendes einzuwirken. Ein widerhakenartiges Verrasten führt zu einer sicheren Verbindung und beispielsweise bei ausreichender Verformbarkeit der ersten Verrastlasche und/oder des ersten Verrastabschnitts zu einer reversiblen Verbindung.

Es ist gemäß einer vorteilhaften Weiterbildung der erfindungsgemäßen Schelle denkbar, dass die erste Kontaktkante einseitig oder beidseits in einen Radius übergehend ausgebildet ist. Dadurch kann ein Kratzen oder Beschädigen des Flansches oder Rohrendes durch den ersten Verrastabschnitt bei Drehung des Flansches um eine Längsmittelachse vermieden werden.

Gemäß einer weiteren bevorzugten Ausführungsform der erfindungsgemäßen Schelle ist die erste Verrastlasche derart ausgebildet, dass der Punktkontakt oder der Linienkontakt der einzige Kontakt zwischen der ersten Verrastlasche und dem Flansch des Rohrendes ist. Dadurch ist die reibungsverursachende Auflagefläche und verklemmende Fläche auf ein Minimum reduziert und die Feststellung einer Verklemmung erheblich vereinfacht, da ausschließlich an der Verrastlasche verklemmt wird.

Bei der erfindungsgemäßen Schelle ragt der Freischwingabschnitt zumindest abschnittsweise nach radial außen ab. Somit steht zumindest das freie Ende des Freischwingabschnitts frei im Raum bzw. liegt nicht am Schellenband an und wirkt auch nicht mit diesem zusammen. Somit kann der Freischwingabschnitt als Leitelement dienen, um beim Einsetzen des Rohrendes dieses Rohrende in Richtung Ringelement zu zentrieren. Vorteilhaft kann sein, dass der Freischwingabschnitt außerhalb des Schellenbandes angeordnet ist, um eine frühestmögliche Zentrierung des Rohrendes zu ermöglichen. Zudem kann ein Verrasten durch Verformung oder Lageänderung des Freischwingabschnitts sehr gut erkannt werden.

Gemäß einer weiteren bevorzugten Ausführungsform der erfindungsgemäßen Schelle ist die erste Verrastlasche gegenüber dem Ringkörper nach radial außen vorgespannt, vorzugsweise federkraftvorgespannt. Diese Vorspannung führt zu einem sicheren und zentrierenden Sitz des Ringkörpers im Schellenband und einer vorteilhaften Zentrierungswirkung durch den Freischwingabschnitt. Die erste Verrastlasche kann in ihrem in das Schellenband eingesetzten Zustand am Schellenband anliegen. Das Schellenband kann dabei entgegen der Federkraft die erste Verrastlasche in Richtung Längsmittelachse druckbeaufschlagen. Zumindest die erste Verrastlasche kann aus einem Material hergestellt sein, welches eine geeignete Federwirkung erzeugen kann. Zusätzlich oder alternativ kann zumindest die erste Verrastlasche eine Federwirkung durch Ihre Geometrieausführung erzielen.

Erfindungsgemäß ist der Freischwingabschnitt so angeordnet und/oder ausgebildet ist, dass er zumindest bei dem Verrasten des Flansches des Rohrendes mit dem ersten Verrastabschnitt frei schwingen kann und ein wahrnehmbares Einrastgeräusch erzeugbar und/oder verstärkbar ist. Der Flansch des Rohrendes kann beim Einsetzen gegen den ersten Verrastabschnitt stoßen und ihn je nach dessen Ausgestaltung verformen, verbiegen und/oder spannen. Passiert zumindest ein Abschnitt des Flansches den ersten Verrastabschnitt und verrastet mit diesem, kann der erste Verrastabschnitt unmittelbar in seine ursprüngliche Ausgangslage zurückkehren, wodurch ein schlagartiges Schwingen des Verrastabschnitts erzeugt wird. Dadurch, dass der Freischwingabschnitt frei im Raum schwingen kann, ist ein Einrastgeräusch wahrnehmbar. Vorteilhaft ist, dass die Schelle bei korrekter Vorpositionierung eine eindeutige akustische Rücckopplung gibt und keine Nachkontrolle und keine Nachjustierung mehr nötig ist.

Vorteilhaft weiterbildungsgemäß kann die Profilschelle eine zweite Verrastlasche umfassen, die am Ringkörper angeordnet ist und einen zweiten Verrastabschnitt und eine zweite Kontaktkante aufweist, wobei die zweite Verrastlasche so angeordnet und/oder ausgebildet ist, dass sie zumindest bei dem Verrasten des Flansches des Rohrendes mit dem zweiten Verrastabschnitt ein wahrnehmbares Einrastgeräusch erzeugen kann. Es ist denkbar, dass das trichterförmige Ende des Rohres mit der zweiten Verrastlasche zusammenwirkt und es daran vorpositioniert und sicher bei einem Spannen der Profilschelle gehalten wird. Sofern zudem die erste Verrastlasche mit dem bikonischen Ende des Rohres zusammenwirkt, ragt die mindestens eine erste Verrastlasche in die entgegengesetzte Richtung entlang der Längsmittelachse vom Ringkörper ab als die mindestens zweite Verrastlasche. Auf diese Weise können beide Rohrenden in einfacher Weise am Ringkörper verrastet werden.

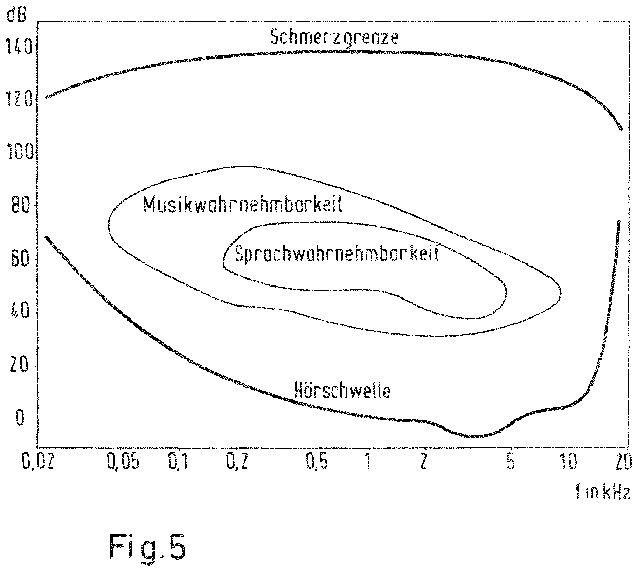

Es ist auch denkbar, dass die erste Verrastlasche und/oder die zweite Verrastlasche derart ausgebildet ist/sind, dass das wahrnehmbare Einrastgeräusch die menschliche Hörschwelle überschreitet, bevorzugt im Bereich der Musikwahrnehmbarkeit, weiter bevorzugt im Bereich der Sprachwahrnehmbarkeit liegt. Hierzu wird insb. auf Fig. 5 verwiesen, die die genannten Grenzen der Musik- und Sprachwahrnehmbarkeit aufzeigt. Die Laschen können beispielsweise derart ausgestaltet sein, dass das erzeugte Einrastgeräusch an eine übliche Umgebungslautstärke angepasst ist. Beispielsweise bei der Montage einer Abgasleitung eines Kraftfahrzeugs muss das Einrastgeräusch insbesondere von der montierenden Person an der Montagelinie sicher und eindeutig war genommen werden können.

Eine Weiterbildung der erfindungsgemäßen Profilschelle umfasst zumindest drei beabstandete erste Verrastlaschen auf zumindest einer Seite des Ringkörpers bezüglich der Quermittelebene. Es ist denkbar, dass der Ringkörper auch mehr als eine zweite Verrastlasche umfasst. Durch mehr als eine erste Verrastlasche kann das jeweilige Rohrende sicherer verrastet werden, wobei drei oder vier Verrastlaschen eine sichere Verrastung ermöglichen. Mehr als vier Verrastlaschen steigern die Verrastungssicherheit nicht signifikant, steigern jedoch die Gefahr von Nichtverrastung, was eine zu vermeidende Nachkontrolle nötig machen würde. Die Anzahl der Verrastlaschen steht jedoch im Verhältnis zum Durchmesser der zu verbindenden Rohrenden oder Flansche. Es ist denkbar, dass ein größerer Durchmesser mehr als vier Verrastlaschen benötigt. Bei einem Strömungsquerschnitt der Rohrenden im Schellenbereich von etwa 4 cm bis 8 cm sind jedoch drei oder vier Verrastlaschen optimal.

Es wird zudem ein Ringelement mit einem Ringkörper für eine Profilschelle vorgeschlagen, wobei das Ringelement zumindest eine erste Verrastlasche umfasst, welche in axialer Richtung des Ringelements vom Ringkörper abragend angeordnet ist, wobei die erste Verrastlasche einen ersten Verrastabschnitt und einen dazu entgegengesetzt verlaufenden Freischwingabschnitt aufweist, wobei der erste Verrastabschnitt ausgebildet ist, um eine in Richtung Quermittelebene des Ringelements wirkende Kraft auf einen Flansch eines Rohrendes auszuüben, und der erste Verrastabschnitt eine erste Kontaktkante aufweist, die zur Herstellung eines Punktkontaktes oder Linienkontaktes mit dem Flansch des Rohrendes ausgebildet ist. Das Ringelement weist die bezüglich der Profilschelle bereits beschriebenen Vorteile und vorteilhaften Wirkungen auf.

Die Erfindung umfasst zudem eine Leitungsverbindungsanordnung mit einem Leitungsende, an dem ein Flansch ausgebildet ist, auf der eine Profilschelle angeordnet ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht auf eine erfindungsgemäße Profilschelle;
- Fig. 2: eine perspektivische Ansicht auf ein erfindungsgemäßes Ringelement;
- Fig. 3: eine Draufsicht auf das erfindungsgemäße Ringelement;
- Fig. 4: eine Schnittansicht durch das erfindungsgemäße Ringelement nach Fig. 3 entlang der Linie IV-IV; und
- Fig. 5: ein Diagramm der menschlichen Hörfläche.

Die Erfindung ist nicht auf eine der vorbeschriebenen Ausführungsformen beschränkt, sondern in vielfältiger Weise abwandelbar.

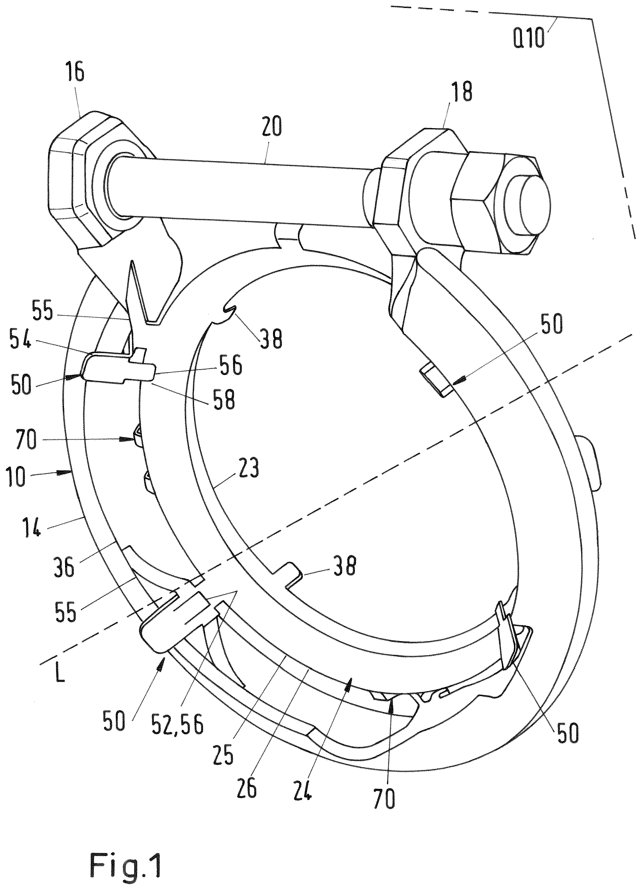

**Figur 1** zeigt eine erfindungsgemäße Schelle 10, die als Profilschelle ausgebildet ist und an einem Flansch eines Rohrendes vorpositionierbar ist. Sie ist in geöffneter Stellung abgebildet, d.h. nicht verspannt und im Vormontagezustand gezeigt, wie sie an den Ort der Montage angeliefert wird. Die Schelle 10 weist ein Schellenband 14 mit zwei Spannköpfen 16 und 18 bzw. Spannbacken auf, welche über ein Spannelement 20 miteinander verbunden sind und durch Umbiegen der Enden des Schellenbandes 14 hergestellt sein können. Es ist aber auch denkbar, die Spannbacken beispielsweise durch in Schleifen umgebogene Enden des Schellenbands zu bilden, wobei in die Schleifen Spannbolzen eingeführt sind. Dabei kann das Profil des Schellenbands auch relativ stark von der gezeigten Form mit einem im Wesentlichen V-förmigen Querschnitt mit zwei von einer ebenen Innenseite radial nach innen geneigten Flanken abweichen.

Das Schellenband 14 ist einteilig abgebildet, kann jedoch auch in einer nicht dargestellten Ausführungsform in zwei Profilhälften unterteilt sein, welche an einer Seite, die den Spannköpfen 16 und 18 entgegengesetzt ist, mittels eines Brückenelements miteinander verbunden sind. Das Schellenband 14 ist von einer Quermittelebene Q10 durchdrungen, in welcher der größte Durchmesser des Schellenbands 14 liegt. Eine die Profilschelle durchdringende Längsmittelachse L steht orthogonal auf der Quermittelebene Q10.

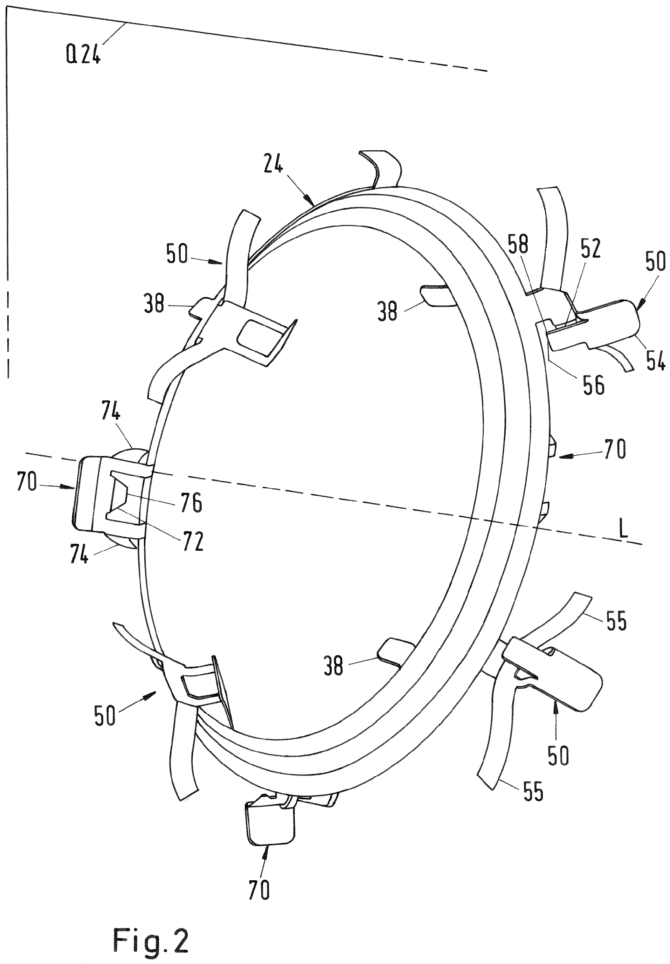

Ein beispielhaft ringförmig ausgeführtes Ringelement 24 mit einem Ringkörper 26 ist innerhalb der Schelle 10 angeordnet und in **Figur 2** in Alleinstellung gezeigt. Das Ringelement ist in seiner Höhe bezüglich der Längsmittelachse L mittig von einer Quermittelebene Q24 durchgriffen, welche parallel und beabstandet zur Quermittelebene Q10 angeordnet ist. Das Ringelement 24 umfasst eine Außenkante 23, welche der Quermittelebene Q10 abgewandt ist, und eine Innenkante 25, welche der Quermittelebene Q10 zugewandt ist. Das Ringelement 24 umfasst vier erste Verrastlaschen 50, welche in axialer Richtung der Profilschelle 10 vom Ringkörper 26 abragend angeordnet sind. Die Verrastlaschen 50 ragen zumindest abschnittsweise aus dem Schellenband 14 der Profilschelle 10 heraus und sind monolithisch mit dem Ringkörper 26 ausgebildet und an dessen Innenkante 25 angeordnet. Ebenfalls monolithisch und an der Innenkante 25 sind drei zweite Verrastlaschen 70 am Ringkörper 26 angeordnet. Die Verrastlaschen 70 erstrecken sich in die entgegengesetzte Richtung bezüglich der ersten Verrastlaschen 50 entlang der Längsmittelachse L vom Ringkörper 26 ab.

Jede erste Verrastlasche 50 ist im Schnitt S-förmig ausgebildet und umfasst einen Basisabschnitt 51, der einerseits in den Ringkörper 26 übergeht. Andererseits schließt sich daran ein Halteabschnitt 53 an, an welchem in Umfangsrichtung symmetrisch hierzu zwei Haltearme 55 angeordnet sind. Jeder Haltearm 55 weist eine bereichsweise radial nach außen und bereichsweise radial nach innen geöffnete, gekrümmte Form auf und bildet einen Federabschnitt aus. Das distalen Ende jedes Haltearms 55 ist nach radial innen verlaufend ausgebildet. Dadurch kommt das distale Ende nicht in Kontakt mit einer Innenkontur 36 des Schellenbandes 14 und wirkt auch nicht mit dieser zusammen. Vielmehr kommt der nach radial außen gebogene Mittelabschnitt des Haltearms 55 mit der Innenkontur 36 in Eingriff. Hierdurch werden das Ringelement 24 und das Schellenband 14 symmetrisch zueinander und ggf. zentrisch bezüglich der Längsmittelachse L ausgerichtet. Zudem sichern die Haltearme 55 eine geeignete Stellung des Ringelements 24 während Transport und Montage der Schelle. Die derart verlaufenden Haltearme 55 führen auch zu einer vorteilhaften Rotationsfähigkeit des Ringelements 24 im Schellenband 14. Beim Verspannen des Schellenbandes 14 können die Verrastlaschen 50 mit den Haltearmen 55 elastisch einfedern und gewährleisten dabei ihre symmetrische Relativposition. An den Halteabschnitt 53 schließt sich ein Zwischenabschnitt 57 und daran ein Freischwingabschnitt 54 an, welcher zugleich das distale Ende der Verrastlasche 50 definiert.

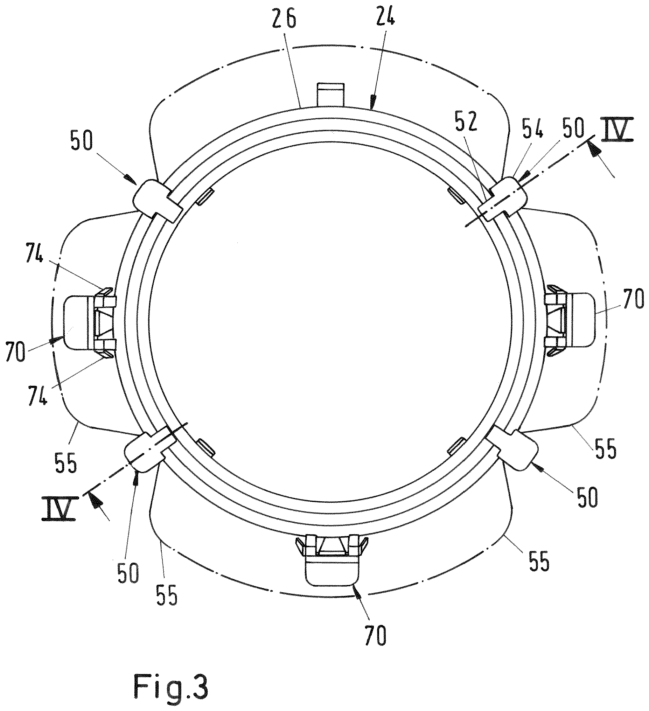

Der Freischwingabschnitt 54 ragt nach radial außen ab, was insbesondere in der Draufsicht gemäß Fig. 3 erkennbar ist. Mit anderen Worten verläuft jeder Freischwingabschnitt 54 etwa in Richtung des Schnittpunkts zwischen Quermittelebene Q10 und Längsmittelachse L. Die Freischwingabschnitte 54 dienen als Leitelemente nach Art eines Trichters, um ein einzusetzendes Rohrende zu zentrieren. Jede Verrastlasche 50 umfasst zudem einen Verrastabschnitt 52, welcher entgegengesetzt zum Freischwingabschnitt 54 verläuft. Der Freischwingabschnitt 54 ist aus dem Zwischenabschnitt 57 ausgestanzt und daher als Stanzabschnitt ebenfalls monolithisch mit der Verrastlasche 50 ausgebildet. Es ist zu erkennen, dass der erste Verrastabschnitt 52 und der Freischwingabschnitt 54 jeder Verrastlasche 50 miteinander fluchten, bzw. in einer Eben liegen.

Der erste Verrastabschnitt 52 ist nach Art eines Widerhakens ausgebildet, um eine in Richtung Quermittelebene Q10 der Profilschelle 10 wirkende Kraft auf einen Flansch eines Rohrendes auszuüben. Dadurch kann der Flansch vorpositioniert und in dieser Position gehalten werden.

Der erste Verrastabschnitt 52 weist hierfür eine erste Kontaktkante 56 auf, die zur Herstellung eines Punktkontaktes oder Linienkontaktes mit dem Flansch des Rohrendes ausgebildet ist. Der Punktkontakt oder der Linienkontakt ist der einzige Kontakt zwischen den ersten Verrastlaschen 50 und dem Flansch des Rohrendes. Die erste Kontaktkante 56 jedes Verrastabschnitts 52 geht beidseits in einen Radius 58 über.

Die erste Verrastlasche 50 ist gegenüber dem Ringkörper 26 nach radial außen vorgespannt, so dass sich der Ringkörper 26 an der Innenkontur 36 des Schellenbandes 14 abstützen kann und dort sicher sitzt. Der Freischwingabschnitt 54 ist so angeordnet und ausgebildet, dass er bei dem Verrasten des Flansches des Rohrendes mit dem ersten Verrastabschnitt 52 frei schwingen kann. Dadurch wird ein wahrnehmbares Einrastgeräusch erzeugt und durch das freie Schwingungsvermögen verstärkt.

Jede zweite Verrastlasche 70 umfasst einen zweiten Verrastabschnitt 72, welcher in verrastenden Eingriff über eine zweite Kontaktkante 76 mit einem Flansch eines Rohrendes kommen kann, und beidseits jeweils einen Flügelabschnitt 74 zum Erzeugen eines Reibschlusses mit einem Flansch des Rohrendes. Die Flügelabschnitte ragen in Richtung Längsmittelachse L und verlaufen zu dieser parallel.

Am Ringkörper 26 sind des Weiteren Führungsnasen 38 angeordnet, welche verkippt bezüglich der Längsmittelachse L und radial nach innen ragen und beide Rohrenden bezüglich der Längsmittelachse L zentrieren können. Das Ringelement 24 kann auf Basis eines blechartigen Werkstücks hergestellt werden. Die Verrastlaschen 50 und 70 sowie die Führungsnasen 38 sind einstückig mit dem Ringelement 24 ausgebildet und können durch Ausstanzen und Umformen erzeugt sein.

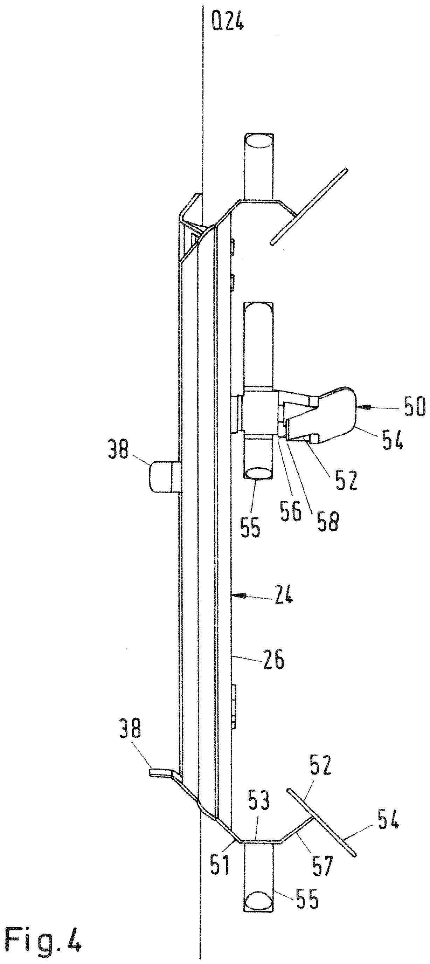

In **Figur 4** ist nun das Ringelement 24 mit integriertem Dichtbereich 28 dargestellt, der einen sich konisch verjüngenden und in axialer Richtung erstreckenden Fortsatz des Ringelement 24 bildet. Dabei entspricht eine Neigung des Dichtbereichs 28 in etwa der Neigung an einer Innenseite des Flansches am Rohrende, so dass er an diesem flächig zur Anlage gebracht werden kann.

**Figur 5** zeigt in einem Diagramm die menschliche Hörfläche, wobei hier der Schalldruckpegel [dB] gegenüber der Schall-Frequenz f [kHz] aufgetragen ist. Das Einrastgeräusch der Verrastlaschen 50 und/oder 70, welches sich beispielsweise als "Klickton" äußern kann, sollte oberhalb der Hörschwelle liegen, bevorzugt aber im Bereich der Musikwahrnehmbarkeit.

Zur Vermeidung von Wiederholungen sollen vorrichtungsgemäß offenbarte Merkmale als verfahrensgemäß offenbart gelten . Ebenso sollen verfahrensgemäß offenbarte Merkmale als vorrichtungsgemäß offenbart gelten.

### Bezugszeichenliste

- 10: Profilschelle
- 14: Schellenband
- 16: Spannkopf
- 18: Spannkopf
- 20: Spannelement
- 23: Außenkante
- 24: Ringelement
- 25: Innenkante
- 26: Ringkörper
- 28: Dichtbereich
- 36: Innenkontur
- 38: Führungsnase
- 50: erste Verrastlasche
- 51: Basisabschnitt
- 52: erster Verrastabschnitt
- 53: Halteabschnitt
- 54: Freischwingabschnitt
- 55: Haltearm
- 56: erste Kontaktkante
- 57: Zwischenabschnitt
- 58: Radius
- 70: zweite Verrastlasche
- 72: zweiter Verrastabschnitt
- 74: Flügelabschnitt
- 76: zweite Kontaktkante

- Q10: Quermittelebene der Profilschelle
- Q24: Quermittelebene des Ringelements
- L: Längsmittelachse

## Patentansprüche

1. Profilschelle (10) mit einem Schellenband (14) und einem ringförmigen Ringelement (24) mit einem Ringkörper (26) für eine Profilschelle, wobei das Schellenband (14) zwei Spannköpfe (16, 18) aufweist, die über ein Spannelement (20) miteinander verbunden sind, wobei das Ringelement (24) zumindest eine erste Verrastlasche (50) umfasst, welche in axialer Richtung vom Ringkörper (26) abragend angeordnet ist, wobei die erste Verrastlasche (50) einen ersten Verrastabschnitt (52) aufweist, wobei der erste Verrastabschnitt (52) ausgebildet ist, um eine in Richtung Quermittelebene (Q24) des Ringelements (24) wirkende Kraft auf einen Flansch eines Rohrendes auszuüben, und der erste Verrastabschnitt (52) eine erste Kontaktkante (56) aufweist, die zur Herstellung eines Punktkontaktes oder Linienkontaktes mit dem Flansch des Rohrendes ausgebildet ist, **dadurch gekennzeichnet, dass** die erste Verrastlasche (50) weiter einen zu dem ersten Verrastabschnitt (52) entgegengesetzt verlaufenden Freischwingabschnitt (54) aufweist, wobei der Freischwingabschnitt (54) so angeordnet und/oder ausgebildet ist, dass er zumindest bei dem Verrasten des Flansches des Rohrendes mit dem ersten Verrastabschnitt (52) frei schwingen kann und ein wahrnehmbares Einrastgeräusch erzeugbar und/oder verstärkbar ist, wobei die zumindest eine erste Verrastlasche (50) in axialer Richtung der Profilschelle (10) vom Ringkörper (26) abragend und zumindest abschnittsweise aus dem Schellenband (14) herausragend angeordnet ist, wobei der erste Verrastabschnitt (52) ausgebildet ist, um eine in Richtung Quermittelebene (Q10) der Profilschelle (10) wirkende Kraft auf einen Flansch eines Rohrendes auszuüben, wobei der Freischwingabschnitt (54) aus dem Schellenband (14) herausragt, zumindest abschnittsweise nach radial außen abragt und ein freies Ende aufweist, das frei im Raum steht und nicht mit dem Schellenband (14) zusammenwirkt, wobei der erste Verrastabschnitt (52) und der Freischwingabschnitt (54) miteinander fluchten.

2. Profilschelle (10) nach Anspruch 1, **dadurch gekennzeichnet, dass** der erste Verrastabschnitt (52) als ein aus der ersten Verrastlasche (50) herausgetrennter Abschnitt, insbesondere als Stanzabschnitt ausgebildet ist.

3. Profilschelle (10) nach einem der vorhergehenden Ansprüche, **dadurch gekennzeichnet, dass** der erste Verrastabschnitt (52) nach Art eines Widerhakens ausgebildet ist und/oder ausgebildet ist, um nach Art eines Widerhakens auf den Flansch des Rohrendes einzuwirken.

4. Profilschelle (10) nach einem der vorhergehenden Ansprüche, **dadurch gekennzeichnet, dass** die erste Kontaktkante (56) einseitig oder beidseits in einen Radius (58) übergehend ausgebildet ist.

5. Profilschelle (10) nach einem der vorhergehenden Ansprüche, **dadurch gekennzeichnet, dass** die erste Verrastlasche (50) derart ausgebildet ist, dass der Punktkontakt oder der Linienkontakt der einzige Kontakt zwischen der ersten Verrastlasche (50) und dem Flansch des Rohrendes ist.

6. Profilschelle (10) nach einem der vorhergehenden Ansprüche, **dadurch gekennzeichnet, dass** die erste Verrastlasche (50) gegenüber dem Ringkörper (26) nach radial außen vorgespannt, vorzugsweise federkraftvorgespannt ist.

7. Profilschelle (10) nach einem der vorhergehenden Ansprüche, **gekennzeichnet durch** eine zweite Verrastlasche (70), die am Ringkörper (26) angeordnet ist und einen zweiten Verrastabschnitt (72) und eine zweite Kontaktkante (76) aufweist, wobei die zweite Verrastlasche (70) so angeordnet und/oder ausgebildet ist, dass sie zumindest bei dem Verrasten des Flansches des Rohrendes mit dem zweiten Verrastabschnitt (72) ein wahrnehmbares Einrastgeräusch erzeugen kann.

8. Profilschelle (10) nach Anspruch 1 oder 7, **dadurch gekennzeichnet, dass** die erste Verrastlasche (50) und/oder die zweite Verrastlasche (70) derart ausgebildet ist/sind, dass das wahrnehmbare Einrastgeräusch die menschliche Hörschwelle überschreitet, bevorzugt im Bereich der Musikwahrnehmbarkeit, weiter bevorzugt im Bereich der Sprachwahrnehmbarkeit liegt.

9. Profilschelle (10) nach einem der vorhergehenden Ansprüche, **gekennzeichnet durch** zumindest drei beabstandete erste Verrastlaschen (50) auf zumindest einer Seite des Ringkörpers (26) bezüglich der Quermittelebene (Q10).

10. Leitungsverbindungsanordnung mit einem Leitungsende, an dem ein Flansch ausgebildet ist, auf der eine Profilschelle (10) nach einem der Ansprüche 1 bis 10 angeordnet ist

## Claims

1. Profile clamp (10) comprising a clamp band (14) and an annular ring element (24) with a ring body (26) for a profile clamp, wherein the clamp band (14) has two tensioning heads (16, 18) connected to one another via a tensioning element (20), wherein the ring element (24) comprises at least one first latching tab (50) which axially protrudes from the ring body (26), wherein the first latching tab (50) has a first latching portion (52), wherein the first latching portion (52) is designed to exert a force acting in the direction of a transverse centre plane (Q24) of the ring element (24) on a flange of a pipe end, and the first latching portion (52) has a first contact edge (56), which is designed to establish point contact or line contact with the flange of the pipe end, **characterized in that** the first latching tab (50) also has a freely rocking portion (54) extending oppositely to the first latching portion (52), wherein the freely rocking portion (54) is arranged and/or designed such that, at least when the flange of the pipe end is being latched to the first latching portion (52), the freely rocking portion can rock freely and a perceptible latching noise can be produced and/or made louder, wherein the at least one first latching tab (50) protrudes from the ring body (26) in an axial direction of the profile clamp (10) and protrudes at least partially out of the clamp band (14), wherein the first latching portion (52) is designed to exert a force acting in the direction of a transverse centre plane (Q10) of the profile clamp (10) on a flange of a pipe end, wherein the freely rocking portion (54) protrudes out of the clamp band (14), at least partially protrudes radially outwards and has a free end which lies freely in space and does not interact with the clamp band (14), wherein the first latching portion (52) and the freely rocking portion (54) are in line with one another.

2. Profile clamp (10) according to Claim 1, **characterized in that** the first latching portion (52) is in the form of a portion, in particular punched portion, which is detached from the first latching tab (50).

3. Profile clamp (10) according to either of the preceding claims, **characterized in that** the first latching portion (52) is formed in the manner of a barb and/or is designed to act on the flange of the pipe end in the manner of a barb.

4. Profile clamp (10) according to one of the preceding claims, **characterized in that** the first contact edge (56) transitions into a radius (58) on one side or on both sides.

5. Profile clamp (10) according to one of the preceding claims, **characterized in that** the first latching tab (50) is designed such that the point contact or the line contact is the only contact made between the first latching tab (50) and the flange of the pipe end.

6. Profile clamp (10) according to one of the preceding claims, **characterized in that** the first latching tab (50) is biased, preferably biased by spring force, radially outwards with respect to the ring body (26).

7. Profile clamp (10) according to one of the preceding claims, **characterized by** a second latching tab (70), which is arranged on the ring body (26) and has a second latching portion (72) and a second contact edge (76), wherein the second latching tab (70) is arranged and/or designed such that it can produce a perceptible latching noise at least when the flange of the pipe end is being latched to the second latching portion (72).

8. Profile clamp (10) according to Claim 1 or 7, **characterized in that** the first latching tab (50) and/or the second latching tab (70) is/are designed such that the perceptible latching noise exceeds the human hearing threshold, preferably is in the music perceptibility range, more preferably is in the speech perceptibility range.

9. Profile clamp (10) according to one of the preceding claims, **characterized by** at least three spaced first latching tabs (50) on at least one side of the ring body (26) with respect to the transverse centre plane (Q10).

10. Line connection arrangement having a line end, at which a flange comprising a profile clamp (10) according to one of Claims 1 to 10 is formed.

## Revendications

1. Bride profilée (10) comprenant une bande de bride (14) et un élément formant bague annulaire (24) pourvu d'un corps de bague (26) destiné à une bride profilée, la bande de bride (14) comportant deux têtes de serrage (16, 18) qui sont reliées entre elles par un élément de serrage (20), l'élément formant bague (24) comprenant au moins une première languette d'encliquetage (50) qui est disposée de manière à faire saillie dans la direction axiale depuis le corps de bague (26), la première languette d'encliquetage (50) possède une première section d'encliquetage (52), la première portion d'encliquetage (52) étant conçue pour exercer une force, agissant en direction du plan médian transversal (Q24) de l'élément formant bague (24), sur une collerette d'une extrémité de tuyau, et la première portion d'encliquetage (52) comportant un premier bord de contact (56) qui est conçu pour établir un contact ponctuel ou un contact linéaire avec la collerette de l'extrémité de tube, **caractérisée en ce que** la première languette d'encliquetage (50) comporte en outre une portion à oscillations libres (54) qui s'étend à l'opposé à la première portion d'encliquetage (52), la portion à oscillations libres (54) étant disposée et/ou conçue de manière à pouvoir osciller librement au moins lorsque la collerette de l'extrémité de tube est encliquetée à la première portion d'encliquetage (52) et un bruit d'encliquetage perceptible pouvant être généré et/ou amplifié, l'au moins une première languette d'encliquetage (50) étant disposée de manière à faire saillie du corps de bague (26) dans la direction axiale de la bride profilée (10) et à dépasser au moins par portions la bande de bride (14), la première portion d'encliquetage (52) étant conçue pour exercer une force, agissant en direction du plan médian transversal (Q10) de la bride profilée (10), sur une collerette d'une extrémité de tube, la portion à oscillations libres (54) dépassant de la bande de bride (14) en faisant saillie radialement vers l'extérieur au moins par portions et comportant une extrémité libre qui se tient librement dans l'espace et qui ne coopère pas avec la bande de bride (14), la première portion d'encliquetage (52) et la portion à oscillations libres (54) étant alignées l'une avec l'autre.

2. Bride profilée (10) selon la revendication 1, **caractérisée en ce que** la première portion d'encliquetage (52) est conçue comme une portion séparée de la première languette d'encliquetage (50), notamment comme une portion estampée.

3. Bride profilée (10) selon l'une des revendications précédentes, **caractérisée en ce que** la première portion d'encliquetage (52) est conçue à la manière d'un ardillon et/ou est conçue pour agir à la manière d'un ardillon sur la collerette de l'extrémité de tube.

4. Bride profilée (10) selon l'une des revendications précédentes, **caractérisée en ce que** le premier bord de contact (56) est conçu pour se transformer en un rayon (58) d'un côté ou des deux côtés.

5. Bride profilée (10) selon l'une des revendications précédentes, **caractérisée en ce que** la première languette d'encliquetage (50) est conçue de manière à ce que le contact ponctuel ou le contact linéaire soit le seul contact entre la première languette d'encliquetage (50) et la collerette de l'extrémité de tube.

6. Bride profilée (10) selon l'une des revendications précédentes, **caractérisée en ce que** la première languette d'encliquetage (50) est précontrainte radialement vers l'extérieur par rapport au corps de bague (26), de préférence précontrainte par la force d'un ressort.

7. Bride profilée (10) selon l'une des revendications précédentes, **caractérisée par** une deuxième languette d'encliquetage (70) qui est disposée sur le corps de bague (26) et qui comporte une deuxième portion d'encliquetage (72) et un deuxième bord de contact (76), la deuxième languette d'encliquetage (70) étant disposée et/ou conçue de manière à pouvoir générer un bruit d'encliquetage perceptible au moins lorsque la collerette de l'extrémité de tube est encliquetée à la deuxième section d'encliquetage (72).

8. Bride profilée (10) selon la revendication 1 ou 7, **caractérisée en ce que** la première languette d'encliquetage (50) et/ou la deuxième languette d'encliquetage (70) sont conçues de manière à ce que le bruit d'encliquetage perceptible dépasse le seuil d'audition humaine, de préférence dans le domaine de perceptibilité musicale, plus préférablement dans le domaine de perceptibilité de la parole.

9. Bride profilée (10) selon l'une des revendications précédentes, **caractérisée par** au moins trois premières languettes d'encliquetage espacées (50) sur au moins un côté du corps de bague (26) par rapport au plan médian transversal (Q10).

10. Ensemble de liaison de conduite comprenant une extrémité de conduite au niveau de laquelle est formée une collerette sur laquelle est disposée une bride profilée (10) selon l'une des revendications 1 à 10.
